# EUROPEAN PATENT APPLICATION

(11) **EP 1 859 685 A1**
(43) Date of publication of application: **28.11.2007**
(21) Application number: 07108606.0
(22) Date of filing: 22.05.2007
(51) Int. Cl.: A23F 5/46, B65D 85/808

(54) **Coffee bag**

(30) Priority: 22.05.2006 NL 1031855
(71) Applicant: Drie Mollen Holding B.V., 5211 SH 's-Hertogenbosch (NL)
(72) Inventor: Krikke, Kees, 1251 ER, Laren (NL); Waldus, Bert, 8448 PH, Heerenveen (NL); van Hellenberg Hubar, Rolf Wilhelmus Henricus Bern, 5062 LP, Oisterwijk (NL)
(74) Representative: Ketelaars, Maarten F.J.M.

(57) **Abstract**

One aspect of the present invention relates to a coffee bag comprising a closed envelope that contains ground coffee, which envelope is permeable to water but does not let the ground coffee through, characterized in that the coffee bag also contains an added aroma composition that is in turn characterized in that it comprises at least 10 mg/kg of one of the following aroma compounds or a mixture thereof:
- 2-furfurylthiol
- 3-methyl-2-butene-1-thiol and
- guaiacol.

It has been found that the quality of the coffee made with a coffee bag can be considerably improved if one or more of the above compounds are introduced into the bag in a suitable amount.

Other aspects of the invention relate to a process for making the coffee bag in question, a process for making coffee with the aid of this coffee bag, and an assembly comprising a coffee machine and the coffee bag according to the invention.

## Description

### Technical field of the invention

The present invention relates to a coffee bag that contains ground coffee and is suitable for use in a device that can make cups of coffee in a short time by extracting the contents of the coffee bag with hot water under a relatively low pressure (e.g. less than 3 bar).

### Background of the invention

Coffee bags that contain ground coffee and are suitable for such use are already known in the prior art, e.g. from US Patent No. 3,620,155. The use of such coffee bags in coffee machines such as Severin^{®} KA 5910 and Bosch^{®} TKP3013, where a pump-based pressure system (2-2.5 bar at most) makes it possible to ensure a brief contact time between the hot water and the ground coffee, offers the advantage that one or two cups of coffee can be made in a simple way and in a short space of time.

However, the quality of the coffee made in this way leaves something to be desired. Thus, the Applicant's consumer tests have shown that the flavour of the coffee obtained using the devices mentioned above is not as rich and not as balanced as that of ordinary filter coffee.

The aim of the present invention is therefore to improve the flavour of coffee made in this way without losing the convenience, i.e. the simplicity and speed, of this method of making coffee.

### Summary of the invention

The inventors have found that the flavour of coffee made by the relatively low-pressure extraction of a coffee bag containing ground coffee can be improved considerably by introducing not only ground coffee into the coffee bag but also an aroma composition that contains at least 10 mg/kg of one of the following aroma compounds or a mixture thereof:
- 2-furfurylthiol
- 3-methyl-2-butene-1-thiol and
- guaiacol.

It has been found that the quality of coffee made with a coffee bag can be considerably improved by adding one or more of the above compounds into the coffee bag in a suitable amount.

The inventors believe that the extraction of the above aroma compounds occurs more efficiently when ground coffee is extracted with a flow-through filter in the usual way than if the same ground coffee is extracted for a short time under a relatively low pressure (e.g. 0.8-3 bar). By adding an aroma composition containing said aroma compounds to the ground coffee in the bag, the concentration of these compounds in the resulting coffee can be increased, despite the less efficient extraction. The amount is preferably chosen so that the concentrations of said aroma compounds in the resulting coffee are comparable with those found in high quality coffee.

The present invention only relates to the improvement of the coffee aroma and not to the aromatization of coffee by imparting a different, i.e. non-coffee flavour and/or smell to it (e.g. hazelnuts or whisky).

### Detailed description of the invention

One aspect of the present invention relates to a coffee bag comprising a closed envelope that contains ground coffee, which envelope is permeable to water but does not let the ground coffee through, characterized in that the coffee bag also contains an added aroma composition that is in turn characterized in that it comprises at least 10 mg/kg, preferably at least 50 mg/kg, and especially at least 200 mg/kg of one of the following aroma compounds or a mixture thereof:
- 2-furfurylthiol
- 3-methyl-2-butene-1-thiol and
- guaiacol.

The term "ground coffee" is used in this document to refer to the product that can be obtained by grinding roasted coffee beans.

The term "aroma composition" is used in this document to refer to a composition that contains one or more aroma compounds in a relatively high concentration. In addition to a mixture of aroma compounds, extracts and/or other aromatizing ingredients, an aroma composition usually also contains a carrier material that does not contribute to the aroma.

The term "aroma" is used in this document to refer to both smell and taste, but it refers especially to the sensory experience perceived through the olfactory epithelium in the nasal cavity. This sensory experience therefore comprises both the perception of the smell and the retronasal perception of taste, which are obtained when a product such as coffee is tasted in the mouth.

The aroma composition according to the present invention is preferably characterized by the fact that the aromatizing part mainly consists of aroma compounds that normally also occur in coffee. The word "mainly" does not apply here to the concentration in which these aroma compounds are present but to their relative contribution to the aroma impact of the aroma composition.

As mentioned before, the aim of the present invention is to improve the coffee aroma and not to impart a non-coffee flavour or smell. This means that, when the coffee bag according to the invention is used normally, a cup of coffee is obtained that does not have any readily detectable non-coffee flavours and/or smells.

A preferred embodiment of the present invention relates to a coffee bag with an added aroma composition comprising at least one and preferably at least two and especially at least three of the following aroma compounds in the specified concentrations:
- 10 mg/kg or more of 2-furfurylthiol
- 1 mg/kg or more of 3-methyl-2-butene-1-thiol
- 100 mg/kg or more of guaiacol.

2-Furfurylthiol is a very characteristic aroma compound that has a roasted, coffee-like aroma. The added aroma composition preferably contains at least 100 mg/kg and especially 150-4000 mg/kg of furfurylthiol.

The sulphur compound 3-methyl-2-butene-1-thiol has a roasted, amine-like aroma and is preferably used in the added aroma in a concentration of 2-400 mg/kg.

Guaiacol is another aroma compound that is advantageously used in the added aroma composition. Guaiacol is preferably present in the aroma composition in a concentration of at least 200 mg/kg and especially 300-5000 mg/kg, and its contribution to the aroma can be described as phenolic and spicy.

The added aroma composition is preferably a composition in liquid, powder or paste form and is preferably introduced into the coffee bag in a concentration of at least 0.03 wt-%, especially at least 0.06 wt-% and most preferably at least 0.1 wt-%, calculated on the amount of ground coffee. The concentration of the aroma composition added is preferably not above 8 wt-%, especially not above 5 wt-% and most preferably not above 3 wt-%, calculated on the amount of ground coffee.

In addition to the aroma compounds mentioned above, the aroma composition according to the invention advantageously contains further aroma compounds. Thus, the aroma composition preferably additionally contains one or more of the following aroma compounds in the specified concentrations:
- 20 mg/kg or more of (E)-β-damascenone
- 10 mg/kg or more of 3-mercapto-3-methylbutyl formate
- 5 mg/kg or more of 2-isobutyl-3-methoxypyrazine
- 500 mg/kg or more of 5-ethyl-4-hydroxy-2-methyl-3(2H)-furanone.

The aroma compound (E)-β-damascenone is said to have a honey-like or fruity aroma. The aroma composition introduced into the coffee bag preferably contains 40-2000 mg/kg of (E)-β-damascenone.

Another sulphur compound, 3-mercapto-3-methylbutyl formate, has an aroma that is also described as roasted, as well as cat-like. The concentration of 3-mercapto-3-methylbutyl formate in the addedaroma composition added is preferably 20-1000 mg/kg.

Pyrazines are well-known aroma compounds, which are formed in food that contains amino acids and reducing sugars and which have been subjected to thermal treatment, such as roasting. The aroma composition introduced into the coffee bag preferably contains 20-1000 mg/kg of 2-isobutyl-3-methoxypyrazine, which is sometimes said to have an earthy aroma.

The aroma composition added preferably contains 800-10,000 mg/kg of 5-ethyl-4-hydroxy-2-methyl-3(2H)-furanone.

According to a particularly preferred embodiment of the present invention, the added aroma composition is a composition in powder form and has a mass-weighted average particle size of 30-800 µm. The particle size of the aroma composition in powder form has an effect on the quality of the coffee made with the coffee bag. Particularly good results are obtained if the water-soluble coffee extract in powder form has a mass-weighted average particle size of 50-600 µm and especially 70-400 µm. The added aroma composition in powder form contains not only the aroma compounds and other aromatic ingredients, but preferably also at least 50 wt-% and especially at least 70 wt-% of a non-aromatic carrier material. Examples of suitable carrier materials are maltodextrin, natural gums (e.g. gum arabic), alginates, and the like.

According to another embodiment, the aroma composition added is in liquid form. Such a liquid composition can be introduced into the coffee bag e.g. by spraying it on the ground coffee before introducing the latter into the coffee bag. The liquid aroma composition added preferably contains at least 50 wt-% and especially at least 75 wt-% of a liquid solvent. The latter is preferably chosen from the group consisting of propylene glycol, triglyceride oils, triacetin, ethanol or combinations thereof. A liquid solvent chosen from the group consisting of propylene glycol and triglyceride oils is preferred most of all.

The amount of water in the aroma composition added is preferably less than 10 wt-% and especially less than 5 wt-%.

The quality of the coffee made with the aid of the coffee bag according to the invention depends on the particle size of the ground coffee to a considerable extent. If the particle size is very large, the extraction will be insufficient, and the coffee is weak and watery. If the particle size is very small, the particles will offer a greater resistance and clog up the pores of the envelope, as a result of which the extraction process is again not optimal, and a weak and watery coffee is again obtained. The coffee bag according to the invention gives good results if the ground coffee in it has a mass-weighted average particle size of 40-800 µm and preferably 100-600 µm.

The ground coffee and the added aroma composition can be introduced into the coffee bag in the form of a mixture, but also as separate components, which are for example each placed in a separate compartment of the envelope. Best results are obtained when the added aroma composition and the ground coffee are homogenously mixed together. This variant is therefore preferred.

The envelope of the coffee bag can in principle be made of any material that is permeable to water but does not let the contents of the coffee bag through, and which is furthermore water resistant and does not have any toxic constituents. The envelope is preferably made of a material chosen from the group consisting of paper, textiles (wovens) and combinations thereof. Paper - and especially filter paper - is the most preferred of these materials.

The advantages of the present invention are particularly manifest in the case of coffee bags that are suitable for making one or two cups of coffee. For this reason, the combined amount of ground coffee and added aroma composition in the envelope of the coffee bag is preferably between 4 and 20 grams and especially between 4 and 10 grams.

The quality of the ground coffee and aroma composition added in the coffee bag may deteriorate during storage as a result of oxidation and/or moisture uptake. In order to ensure that the product remains stable during storage, the coffee bag is preferably placed in a closed airtight pack that is filled with an oxygen-deficient gas, preferably nitrogen.

The envelope of the coffee bag preferably comprises a top layer and a bottom layer that are joined together near their longitudinal edges. Particular preference is given to an envelope that has a disc-shaped top layer and a disc-shaped bottom layer, and where the part of the top layer and the part of the bottom layer that are joined to each other form an annular sealed joint.

Another aspect of the present invention relates to the use of an aroma composition as described above for improving the quality of coffee bags filled with ground coffee.

The present invention also provides a process for making a coffee bag filled with ground coffee, in which the envelope of the coffee bag contains both ground coffee and an aroma composition as described above. In particular, this aspect of the invention relates to a process for making a coffee bag that is filled with ground coffee, where the coffee bag contains 4-20 grams of ground coffee and an aroma composition as described above. Particularly preferred is a process in which the ground coffee and the aroma composition are mixed together before they are introduced into the pouch of the coffee bag. In this process, preferably 1-1000 mg and especially 1-400 mg of the aroma composition are introduced into the coffee bag containing ground coffee.

A further aspect of the invention relates to a process for making hot coffee, in which hot water is made to percolate through a coffee bag as described above. Preference is given to a process in which the percolation is carried out under a pressure that lies between 0.8 and 3 bar and at a temperature that lies between 70 and 95°C and preferably between 75 and 90°C. A process in which the percolation is carried out under a pressure of between 1.0 and 2.5 bar is preferred in particular.

Particularly good results can be obtained with the process of the present invention if the percolation is carried out for 15-60 seconds, using hot water at a flow rate of 2-10 ml/s and preferably 3-6 ml/s for the percolation. The time needed to collect 80% of the supplied hot water in the form of coffee is chosen here as the total time of percolation. The speed of percolation is equal to the average percolation speed during this period.

A further aspect of the present invention relates to an assembly comprising:
- a coffee machine and
- a coffee bag as described above,
where the coffee machine comprises a container that has a first side and an opposite second side, between which the bag can be inserted, the first side of the container is provided with an outlet for the introduction of hot water, and the second side of the container is provided with a discharge tube for discharging coffee formed in the container, where the coffee machine is designed in such a way that hot water under pressure is passed to the first side of the container during use, as a result of which said supplied hot water is forced through the bag in order to extract the ground coffee in the bag and to dissolve water-soluble coffee extract present in the bag, with the coffee thus formed flowing out of the container via the discharge tube.

In a preferred embodiment of the present invention, the coffee machine is set up for the introduction of the hot water under such a pressure that the pressure in the outlet of the inlet tube is above atmospheric pressure. An assembly in which the pressure in the outlet is below 2.5 bar is preferred in particular.

The present invention is further illustrated with the aid of the following examples.

### EXAMPLES

### Example 1

Ground coffee (mixture of Arabica and Robusta with the following particle-size distribution
- 0.6 mm or more: 4-10 wt-%
- 0.3 mm or more: 54-66 wt-%
- 0.125 mm or more: 26-34 wt-%
- 0.125 mm or less: 1-5 wt-%, is sprayed with 1.0 wt-% of a liquid aroma composition and then the ground coffee is stirred for some time to distribute the aroma composition in the ground coffee homogeneously. Coffee bags are then filled with 7-gram portions of the resulting mixture of ground coffee and aroma composition. Coffee bags are also filled with 7-gram portions of the same ground coffee but without the added aroma composition, for use as reference samples.

The envelope of the coffee bag consists of two disc-shaped pieces of filter paper that are joined together at the edge with the aid of an annular sealed joint. The outside diameter of the coffee bag, including the sealed joint, is about 71 mm, while the inside diameter of the coffee bag is about 61 mm.

The liquid aroma composition consists of a medium-chain triglyceride oil as the solvent and a mixture of the following aroma compounds:
- (E)-β-damascenone
- 2-furfurylthiol
- 3-mercapto-3-methylbutyl formate
- 3-methyl-2-butene-1-thiol
- 2-isobutyl-3-methoxypyrazine
- 5-ethyl-4-hydroxy-2-methyl-3(2H)-furanone, and
- guaiacol.

A Gustino^{®} TKP3013 coffee machine made by Bosch was used to make a cup of coffee using the two different types of coffee bag. The coffee thus prepared was tested by an expert panel and the quality of the samples evaluated was compared. The results showed that the quality of the coffee made can be improved significantly by the addition of the aroma composition.

### Example 2

Example 1 was repeated but the ground coffee was now sprayed with 0.5 wt-% of a liquid aroma composition. The liquid aroma composition consisted of an ethanolic solution of 100 mg/l of 2-furfurylthiol.

The coffee obtained with the aromatized ground coffee was again compared by an expert panel with that obtained with a reference sample. The expert panel came to the conclusion that the coffee made with the coffee bag containing added furfurylthiol tasted better than the reference sample. In particular, the former had a stronger and more "roasty" flavour than the latter.

### Example 3

Example 1 was repeated, but the ground coffee was now sprayed with 0.8 wt-% of a liquid aroma composition.

The liquid aroma composition consisted of a solution of 100 mg/l of 3-methyl-2-butene-1-thiol in triacetin and ethanol.

The coffee obtained with the aromatized ground coffee was again compared by an expert panel with that obtained with a reference sample. The expert panel came to the conclusion that the coffee prepared with the coffee bag containing added 3-methyl-2-butene-1-thiol tasted better than the reference sample. In particular, the former had a fuller, more complex "roasty" flavour than the latter.

### Example 4

Example 1 was repeated but the ground coffee was now sprayed with 0.5 wt-% of a liquid aroma composition.

The liquid aroma composition consisted of an ethanolic solution of 5 g/l of guaiacol.

The coffee obtained with the aromatized ground coffee was again compared by an expert panel with that obtained with a reference sample. The expert panel came to the conclusion that the coffee prepared with the coffee bag containing added guaiacol tasted better than the reference sample. In particular, the former had a more pleasant, more spicy and more phenolic flavour than the latter.

## Claims

1. Coffee bag comprising a closed envelope that contains ground coffee, which envelope is permeable to water but does not let the ground coffee through, **characterized in that** the coffee bag also contains an added aroma composition that is in turn **characterized in that** it comprises at least 10 mg/kg, preferably at least 50 mg/kg, of one or more of the following aroma compounds:
- 2-furfurylthiol
- 3-methyl-2-butene-1-thiol and
- guaiacol.

2. Coffee bag according to Claim 1, **characterized in that** the aroma composition comprises at least one and preferably at least two of the following aroma compounds in the specified concentrations:
- 10 mg/kg or more of 2-furfurylthiol
- 1 mg/kg or more of 3-methyl-2-butene-1-thiol
- 100 mg/kg or more of guaiacol.

3. Coffee bag according to any one of the preceding claims, **characterized in that** the added aroma composition contains 150-4000 mg/kg of furfurylthiol.

4. Coffee bag according to any one of the preceding claims, **characterized in that** the added aroma contains 2-400 mg/kg of 3-methyl-2-butene-1-thiol.

5. Coffee bag according to any one of the preceding claims, **characterized in that** the added aroma composition contains 300-5000 mg/kg of guaiacol.

6. Coffee bag according to any one of the preceding claims, **characterized in that** the added aroma composition is a composition in liquid, powder or paste form and is present in the coffee bag in a concentration of 0.03-8 wt-% and preferably 0.1-3 wt-%, calculated on the amount of ground coffee.

7. Coffee bag according to Claim 6, **characterized in that** the added aroma composition is a composition in powder form and has a mass-weighted average particle size of 30-800 µm.

8. Coffee bag according to any one of the preceding claims, where the combined amount of ground coffee and added aroma in the coffee bag is between 4 and 20 grams.

9. Use of an aroma composition as defined in Claims 1-8 for improving the quality of coffee bags filled with ground coffee.

10. Process for making a coffee bag containing ground coffee, **characterized in that** the coffee bag contains 4-20 grams of ground coffee and an aroma composition as defined in Claims 1-8.

11. Process for making coffee, in which hot water is made to percolate through a coffee bag according to any one of Claims 1-8.

12. Process according to Claim 11, in which the percolation is carried out under a pressure that lies between 0.8 and 3 bar and at a temperature that lies between 70 and 95°C and preferably between 75 and 90°C.

13. Assembly comprising:
- a coffee machine and
- a coffee bag according to any one of Claims 1-8,
where the coffee machine comprises a container that has a first side and an opposite second side, between which the bag can be inserted, the first side of the container is provided with an outlet for the introduction of hot water, and the second side of the container is provided with a discharge tube for discharging coffee formed in the container, and where the coffee machine is designed in such a way that hot water under pressure is passed to the first side of the container during use, as a result of which said supplied hot water is forced through the bag in order to extract ground coffee in the bag and to dissolve water-soluble coffee extract present in the bag, with the coffee thus formed flowing out of the container via the discharge tube.
